# EUROPEAN PATENT APPLICATION

(11) **EP 1 850 608 A1**
(43) Date of publication of application: **31.10.2007**
(21) Application number: 07301006.8
(22) Date of filing: 27.04.2007
(51) Int. Cl.: H04Q 7/32

(54) **A system for automatic changing settings of mobile terminals located in a certain area and a method therefor**

(30) Priority: 30.04.2006 CN 200610077216
(71) Applicant: France Telecom, 75015 Paris (FR)
(72) Inventor: Dang Zhengfa, BEIJING, P.R.C. 100080 (CN); Jiang Wenijian, BEIJING, P.R.C. 100080 (CN); Chen Zili, BEIJING, P.R.C. 100080 (CN)

(57) **Abstract**

This invention provides a system to change settings of mobile terminals located in a certain area automatically. The system comprises a setting server (200) for delivering configurable settings to mobile terminals, and a setting client (100) for receiving settings (308) from setting servers (200) and changing settings of mobile terminals (310). The setting client comprises a communication unit (110) for receiving setting information for the mobile terminal from a setting server (204) in the predetermined area; and a setting-changing unit (120) for changing current settings of the mobile terminal based on the received setting information. The setting server comprises a setting information generation unit (220) for generating the setting information for the mobile terminals located in the predetermined area; and a communication unit (210) for transmitting the setting information to the setting clients operatively coupled to the mobile terminal located in the predetermined area. This invention can be used in cinema, meeting room, and any other places which have special requirements for mobile terminals to automatically change the settings of mobile terminals into proper settings without any effort from the user.

## Description

### Technical field

This invention relates to a terminal mobile, and more particularly, to a system enabling automatic changing settings of mobile terminals in a certain area and a method used by the same.

### Background of the Invention

Mobile terminals are required to be used in various environment, a series of settings of mobile terminals are available to users. Users can change the behaviour of a mobile terminal by changing these settings. These settings include ringing tone, ringing volume, keypads tone, vibration and etc.

There are many different situations where users prefer to change the settings of their mobile terminals temporally. For example, when users are in a cinema, in a meeting room, or when they are sleeping.

For a user to be able to change settings quickly, there are some mechanisms to enable them to change all the settings in a single step. For example, using a profile is one of them. It is easy and quick. A profile is a group of settings which can be activated together. Usually there will be several factory profiles for mobile terminals, like e.g. normal, silent, meeting, outdoor, flight, for user's convenience.

Even users can change setting of mobile terminals in a single step, but it is still a disadvantage for them to frequently change settings manually.

There are some known methods to enable changing settings of mobile terminals automatically. These methods require the user to choose the settings for a certain time or a certain location. After that, the stored settings will be activated at the corresponding time or when the user enters a defined location. This needs some manual pre-set and configuration, implying it does not solve the problem completely.

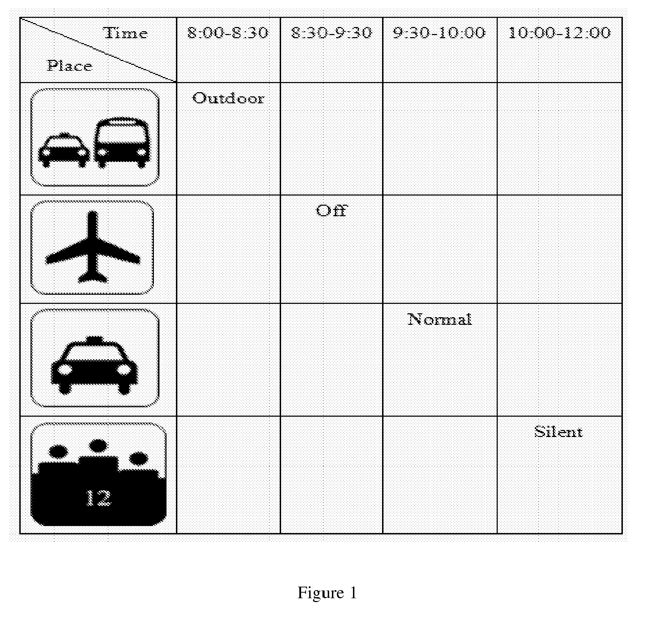

Usually, the user has to change the settings for a mobile terminal when they come into a precise location or at a precise time. In another word, the mobile terminal settings depend on both time and location. Automatically changing mobile terminal settings can only be achieved by making use of both time and location. In Figure 1, an example of time-and-location-depending settings is illustrated.

A key aspect it is that it may not be suitable for the users of mobile terminals to decide themselves of the settings in some situations. For example, some users may think it is OK to use mobile terminals in a hospital if only they switch mobile terminals to silent mode.

This invention intends to change the mobile terminal settings in order to automatically adapt to the requirement of the situation, without any effort of the user.

Up to now, there are 2 typical solutions to change settings of mobile terminals automatically. They are *SmartProfiles* and *Changing settings of a mobile terminal.*

SmartProfiles^{®} (current version 1.06) is a software solution for Series 60 mobile phones from SymbianWare company (http://www.symbianware.com/). It allows automatic changing settings of mobile terminals according to the user's schedule or calendar.

SmartProfiles enables the user to automatically switch settings of the user's mobile phone by selecting time (24 hours) and/or weekday (Monday - Sunday): The user simply choose any time of day and any weekday (e.g. daily, office days, weekend, Monday, Tuesday, Wednesday, Thursday, Friday, Saturday or Sunday) and SmartProfiles will switch and activate the settings automatically at the selected time.

SmartProfiles can also work with the user's Calendar. If the user have an appointment in Calendar the user don't need to add a line to the user's SmartProfiles schedule. The program will select defined profile automatically when it finds the keyword assigned for settings.

We can see that SmartProfiles is based on timer-controlled activation and switches from settings. If the user well know activities for the user's every day's life, the user can (sometime SmartProfiles can help the user) choose proper settings for each activity, then SmartProfiles will automatically change settings for the user. In this way, SmartProfiles can help the user a lot.

SmartProfiles makes good use of one feature of settings: time dependency. However, SmartProfiles still has some defects. The problems remaining are:
1. Sometime the user doesn't know exact time of each activity. But SmartProfiles needs exact beginning and ending time for each schedule record.
2. SmartProfiles can help the user to change settings, but the user has to edit schedule records or calendar notes manually. If the user forgot to do so, SmartProfiles can not help the user either.
3. Sometime the settings the user chose for certain activity does not meet the requirement of that activity. For example, the user chose SILENT profile when the user entered a hospital, but in the hospital people are required to turn off their mobile phones.

The other solution for automatic changing settings of a mobile terminal is disclosed in United States Patent Application Publication 2004/0235464 A1, titled "Changing settings of a mobile terminal", to Tapio Korkalo, et al.

In this invention, a device (can be a software module in a mobile terminal) is proposed which enables a change of settings of applications implemented in a mobile terminal. The proposed device comprises a storage portion for storing a plurality of configurations. Each stored configuration is associated to at least one location and each stored configuration defines at least one setting for at least one application implemented in a mobile terminal. The proposed device further comprises a controlling portion for receiving information on a current position of a mobile terminal, for retrieving automatically a configuration associated to a location identified by the position information from the storage portion, and for changing settings of applications implemented in the mobile terminal according to the retrieved configuration.

Further, a system is proposed, which comprises a mobile terminal having the features of the proposed device, and in addition at least one unit transmitting signals to the mobile terminal. These signals enable the mobile terminal to provide information on the current position of the mobile terminal as position information to the controlling portion. The signals can either include information on the current position of the mobile terminal or enable the mobile terminal to determine its current position.

The invention proceeds from the idea that the settings could be changed automatically depending on the respective location of the mobile terminal, when stored configurations are associated to different locations.

It is an advantage of the invention that the user of a mobile terminal has to define the settings for a specific location only once, not each time when reaching this location.

But this invention can not solve the problem to automatically switch profiles completely, and still has many defects. We will explain them one by one in the following:
1. A device for mobile terminals can store settings for each location, and restore them when mobile terminals reach that location again. However, users still need define the settings for that location when they come there for the first time, manually.
2. Settings for each location have to be stored on the device, so that these settings can be restored when mobile terminals reach the location again. This will cost a lot of extra spaces on mobile terminals if the device is actually software solution.
3. Users are required to define settings for each location. Do the settings from users meet the requirement of that place? Nobody can promise that.
4. The most serious problem is that, in this invention, people think profiles only depend on location. However, profiles vary with both location and time. For example, the user is at home. The user may want normal profile for 8:00-22:00, but the user wants silent profile for 22:00~8:00 when the user are sleeping. This invention can not help at all.

Accordingly, there is a need for a system that can automatically change settings of the mobile terminals when it enters into a range with special requirements.

### Contents Of The Invention

An aspect of embodiments of the present invention is to address at least the above problems and/or disadvantages and to provide at least the advantages described below.

Accordingly, an aspect of this invention is to provide a setting client (SC) which can automate the changing process of settings in a mobile terminal based on a setting information received from a setting server when the mobile terminal enters into a predetermined area or range, which can be defined for example by the area covered by a radio cell in the case of a wireless system, in which special requirements need to be met by the mobile terminal and whereby no user intervention is needed.

It is another object of the present invention to provide a setting server (SS) which can transmit settings dependent on both the current place and time to a setting client operatively coupled to a mobile terminal located in a predetermined area in which special requirements are to be met by the mobile terminals, whereby the settings are always the expected settings so as to avoid the situation that settings selected by mobile users are not suitable for the area. The setting client is operatively coupled to the mobile terminal in the sense that it is either embedded on the mobile terminal or embedded on a separate module which is linked by any mean to the mobile terminal.

It is yet another object of the present invention to provide a method which is used for communicating setting information for a mobile terminal between a setting server and a setting client operatively coupled to a communication terminal located in a predetermined area in which special requirements are to be met by the mobile terminals, whereby there is no need to change the settings of the mobile terminal any more as long as the communication terminal is in the predetermined area. After starting up the SC, the settings set into the mobile terminal are always right.

To achieve the above objects and advantages, there is provided a setting client for automatically changing the settings of a communication terminal located in a predetermined area, said setting client comprising a communication unit for receiving setting information for the mobile terminal from a setting server; and a setting-changing unit for changing current settings of the mobile terminal based on the received setting information.

To achieve the above objects and advantages, there is provided a setting server for delivering setting information for mobile terminals to setting clients operatively coupled to mobile terminals located in a predetermined area, said setting server comprising a setting information generation unit for generating the setting information for the mobile terminal located in a predetermined area; and a communication unit for transmitting the setting information to the setting clients operatively coupled to mobile terminals located in a predeterminedarea.

To achieve the above objects and advantages, there is provided a method for communicating setting information for a mobile terminal between a setting server and a setting client operatively coupled to a mobile terminal located in a predetermined area in which the setting server located, comprising the steps of transmitting the setting information by the setting server according to preset requirement for the predetermined area; receiving the setting information by the setting client from the setting server; and changing current settings of the mobile terminal by the setting client based on the received setting information.

Other objects, advantages, and obvious features of the invention will become apparent to those skilled in the art from the following detailed description, which, taken in conjunction with the annexed drawings, discloses exemplary embodiments of the invention.

### Description of figures

The above aspects and other objects, features, and advantages of certain exemplary embodiments of the present invention will be more apparent from the following description taken in conjunction with the accompanying drawings, in which:
Figure 1 is a diagram showing the time & location dependency of settings generally used by mobile terminals;
Figure 2 is a schematic block diagram of a system according to an exemplary embodiment of the present invention;
Figure 3 is a diagram for explaining an interaction procedure between a setting client (SC) and a setting server (SS) in case of SC and SS locating in a cinema and using point to point wireless communication according to an exemplary embodiment of the present invention;
Figure 4 is a flow chart explaining the process executed in SC shown in Figure 3; and
Figure 5 is a flow chart explaining the process executed in SS shown in Figure 3.

### Detailed description of the invention

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

According to the present invention, a system is proposed which consists of a setting client device (SC) for changing settings of the mobile terminal based on the received setting information and a setting server device (SS) for delivering the settings to a mobile terminal located in a predetermined area. These two devices work together to change settings of mobile terminals automatically.

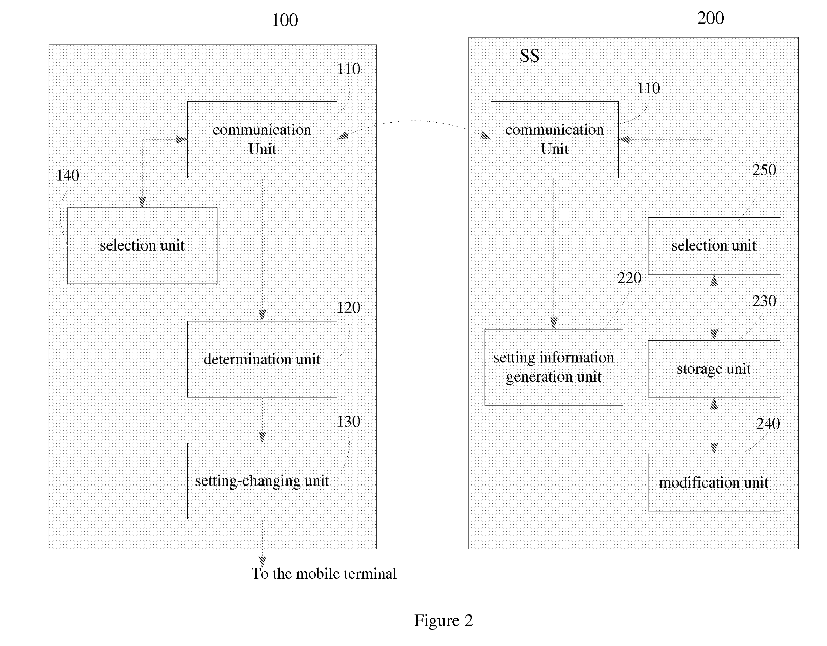

Figure 2 is a schematic block diagram of a system 10 according to an exemplary embodiment of the present invention. The system 10 includes a setting client (SC) 100 and a setting server (SS) 200. SC 100 is a hardware device integrated with or detachably coupled to the mobile terminal, wherein SC 100 can be attached to the mobile terminals through wireless connections or wired lines, or be installed in the mobile terminals as a software module or a standalone software. SC 100 is responsible to receive settings from SS and adjust the current settings of a mobile terminal according to received settings. SS 200 is a device which is responsible to deliver settings to SC in a predetermined area. The settings delivered by SS 200 are configurable according to the requirements of the area. Usually, SS 200 is a standalone device which is deployed in certain places where special settings of mobile terminals are required.

A detailed description will be made to the setting client 100 and the setting server 200 below with reference to Fig. 2.

### 1. Setting Client (SC) 100

The SC 100 is a device tangibly or intangibly coupled to a mobile terminal or integrated with a mobile terminal.

As shown in Fig. 2, the SC 100 comprises a communication unit 110, a setting-changing unit 120, a determination unit 130, and a selection unit 140.

The communication unit 110 enables the SC 100 to communicate with SS 200 through wireless communication or wired communication to receive setting information transmitted by SS 200. This communication unit 110 is capable of performing wireless communication such as point to point communication, broadcasting communication, etc. and wired communication through cable, fibre, and so on with SS 200. The short distance wireless communication for example point to point wireless communication, such as Wi-Fi, Bluetoooth, Zigbee or the like, is preferable for SC because there may be many SSs which are available to SC but deliver different settings in case of long distance wireless communication.

The communication unit 110 receives the setting information from SS 200 at a predetermined time interval, for example 120 seconds, and sends the setting parameters contained in the received setting information to the setting-changing unit 120. If the communication unit 110 does not receive any setting information for a predetermined time, the communication unit 110 determines there is no setting server covering the predetermined area.

In case of the point to point wireless communication, the communication unit 110 further includes a searching section (not shown) for searching for the setting server periodically in order to receive the setting information therefrom.

The setting-changing unit 120 changes the current settings of the mobile terminal based on the received settings information from the communication unit 110. If the setting-changing unit 120 does not receive any setting information for a predetermined time, then the setting-changing unit 120 restores the mobile terminal's previous setting.

The setting-changing unit 120 is the interacting interface between SC 100 and the mobile terminal. This unit uses proper mechanism provided by mobile terminals to change their settings, not only change current settings of the mobile terminals into settings contained in the received setting information from SS 200 and vice versa, but also change current settings of the mobile terminals into the default settings set when manufacturing. For different mobile terminals have different mechanism (API) to change their settings, this unit may vary with mobile terminals.

The determination unit 130 determined whether setting suitable for the mobile terminal is contained in the setting information received by the communication unit 110, if the received setting information contains valid setting, the determination unit 130 send the setting to the setting-changing unit 120. It will be understood by those skilled in the art that the determination unit 130 can be omitted in case of the setting information transmitted from the SS 200 contains the valid setting for the mobile terminal determinately. In this case, the communication unit 110 will send setting parameters with predetermined values indicating this case and the setting-changing unit 120 will not make a change after receiving said setting parameters.

In case of wireless communication, there may be other setting servers covering the area covered by the the setting server 200. Thus, it is possible that the setting client 100 received more than one setting information from more than one setting servers. In the circumstance, said setting client 100 further includes a selection unit 140 for selecting a setting server among these SS to receive the setting information therefrom based on the received information, for example priority parameter of the SS contained in the received information, or on a first received first effected basis. But the latter case may cause some uncertain behavior of SC, so it's recommended that the selection unit 140 made a choice based on a unique priority number of each SS in the same location contained in the setting information from SS 200. If there is only one SS 200 covering a predetermined area, the selection unit 140 can be omitted either.

Further, SC 100 can also comprises a modification unit (not shown) to modify several options for its own, such as default settings of mobile terminal, enabling SC after mobile terminals' boot and etc. These settings are saved for any future use. These options will also define the behaviour of SC when SC receives settings from SS, such as automatically accepting settings or asking users to confirm received settings.

The received settings information from SS 200 may be taken as a valid or invalid one, it depends on SC's options. If SC is configured to accept settings from SS 200 automatically and if settings are available, SC will take these settings as valid settings; but if SC is configured to ask user for confirming, only after user confirm confirmation, these settings can be taken as valid settings. It's also possible for SC to only accept certificated settings from operator, this will require operator to assign certification to SS owner. Based on the SC's options, the behavior of SC adjusting current settings of mobile terminals according to the received settings after valid settings is received can also be configured. For example, SC will adjust settings of mobile terminals after SC receives the same settings for three times.

The proposed SC can be, in particular, a mobile terminal of which settings are to be changed, or a controller means for the mobile terminals. Such a controller means can be implemented in software or hardware.

Further, the respective unit in SC 100 can be implemented as a single means or can be combined and implemented as multiple means separated from each other, for example, the selection unit 140 and the modification unit can be implemented as a single control unit.

### 2. Setting Server (SS) 200

SS is a device which is either deployed in a telecommunication network or independently from a telecommunication network, where special requirements (including ringing volume, radio transmission, etc) for mobile terminals are needed, such as a cinema, a meeting room, a hospital and so on. In both cases, it communicates with the mobile terminal using either a proprietary protocol and messages (an example of which is described later on) or any standard protocol which can embed the messages to communicate between the setting server and the setting client operatively coupled to the mobile terminal (e.g; SMS etc...).

As shown in Fig. 2, the SS 200 comprises a communication unit 210, a setting information generation unit 220, a storage unit 230, a modification unit 240, and a selection unit 250.

The setting information generation unit 220 generates the setting information suitable for the mobile terminals located in the predetermined area.

The communication unit 210 transmits the setting information generated by the setting information generation unit 220 at a predetermined time interval. The communication unit 210 is similar with the communication unit 110 of SC 100 and thus further description thereof is omitted. In order that SS 200 will only affect SC in a expected area, it will be better for this communication unit 210 to have the ability to adjust its emission strength so that the covering area of SS 200 is configurable in case of wireless communication applied between SC 100 and SS 200. For SS 200 is mainly used in a closed space, it will also be better for the penetration ability of the communication signal emitted to be weak, thus it will not affect outside SC.

The storage unit 230 stores the setting information generated by the setting information generation unit 220 in a setting record unit. A settings record consists of different settings parameters, such as ring volume, vibration, and etc, which are expected to be activated on mobile terminals. A settings record also has time slot parameter. This time slot parameter indicates the starting time and ending time of the setting record. SS 200 will deliver corresponding setting parameters when its time slot is coming. This time slot parameter can be only used by SS to decide which settings record to be delivered. SC 100 then can neglect this time slot parameter because it is possible that SC 100 will move out of SS's area within this time slot. But the present invention is not limited to this, and SC 100 can perform some activities according to the time slot information based on its own options if needed. This time slot parameter enables our solution to make use of time and location dependency of setting for mobile terminals. Further, a settings record also has a priority parameter which is unique for a SS 200 to indicate the priority order among the SS. The above illustrated parameters are only for an exemplary purpose and the present invention is not limited to these parameters, These parameters can be changed, added, or deleted based on the requirements of the specific place.

In the following Table 1, an example of settings records stored in the storage unit 230 on a SS 200 located in the cinema is shown.

**Table 1**

| Starting time | Ending time | Ring Volume | Vibration | Priority | Notes: |
|---|---|---|---|---|---|
| 9:00am | 10:50am | 0 | On | 11 | the first movie |
| 11:10am | 13:00pm | 0 | On | 11 | The second movie |
| 13:50pm | 16:00pm | 0 | On | 11 | The third movie |

As shown in Table 1, no requirement for mobile terminals is needed from 10:50am to 11:10am, SC 100 will restore previous settings of the mobile terminal. Between 11:10am and 13:00pm, all SC 100 will change settings of mobile terminals in the cinema to ring volume 0, vibration ON.

Since there won't be too many records on single SS, the capacity of the storage unit 230 doesn't have to be very large and thus size and cost of the SS 200 can be reduced.

The modification unit 240 adds, edits, or removes the setting recorders stored in the storage unit SS according to variation in the requirements of the place with time elapse.

The selection unit 250 selects one of the setting recorders from the storage unit 230 based on current time and sends it to the communication unit 210 for transmitting in the predetermined area. If the selection unit 250 can not find a setting record for the current time in the storage unit 230, the communication unit 210 will transmit a null setting information at a next time interval. Said null setting information is a information which contains setting parameters with special values.

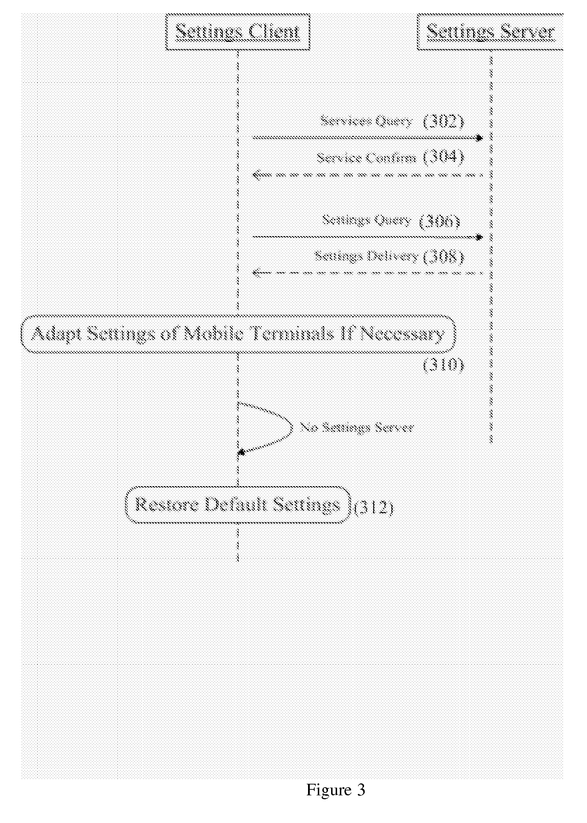

Figure 3 is a diagram for explaining interaction procedure between SC and SS in case of SC and SS locating in a cinema and using point to point wireless communication according to an exemplary embodiment of the present invention.

In the following, the communication between SC and SS located in a cinema by using point to point wireless communication will be described in detail with reference to Table 1 and Fig. 3.

As shown in Fig. 3, the communication between SC and SS are quite simple.

After SC is started, it obtains current settings of mobile terminals and saves it as a default setting for the mobile terminal. Then SC begins to search SS periodically. For example if Bluetooth is used as the communication method, the search section based on service discovery protocol (SDP) will be used to search SS.

If there is SS available, SC 100 sends service query in step of 302. If response of service query is positive in step of 304, SC 100 will send settings query in step of 306. SS 200 then sends back settings as required by SC 100 in step of 308. SC 100 will validate the received settings, and adjust the current settings of mobile terminals in step of 310.

If no SS is available, SC 100 will restore settings of mobile terminals to the default settings in step of 312.

However, if the communication method is based on broadcasting, it will be possible for SS 200 to broadcast information to SC 100 periodically. In this occasion, SC 100 only receives the broadcast information and don't have to send out any information.

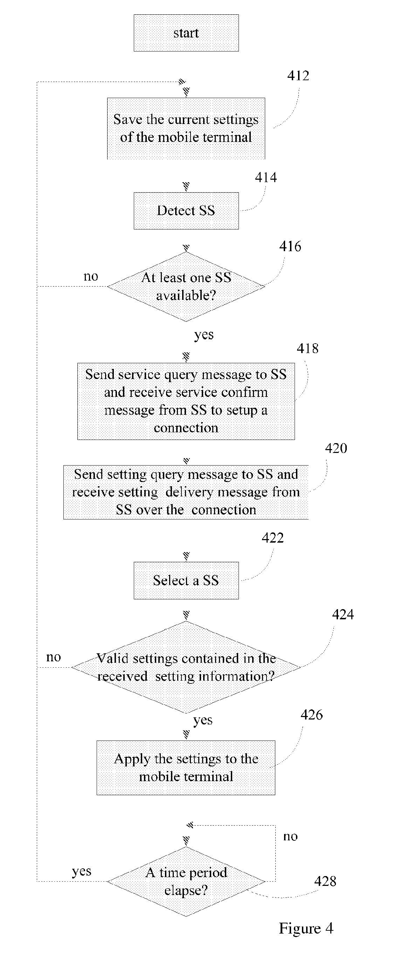

Figure 4 is a flow chart explaining the process executed in SC 100 shown in Figure 3. In the following, the process executed in SC 100 will be described with reference to Fig. 4.

At the beginning, SC 100 is started which can be configured to be started with boot of mobile terminals, or to be started manually. There is no difference in SC 100's behavior between these two modes.

In step of 412, the setting-changing unit 120 saves the current settings of the mobile terminal as the default setting.

In step of 414, the communication unit 110 search for all possible existing in the cinema. Details of this process depend on the protocol used by the communication unit 110.

In step of 416, the communication unit 110 determine that at least one SS is detected or not. If no SS is detected, the process returns to the step of 412.

In step of 418, the communication unit 110 sends a service query message to all available SS and receives a service confirm message from a SS so as to a connection between the SC and a SS is setup.

In step of 420, the communication unit 110 sends a setting query message to all available SS and receives setting delivery messages from SS over the setup connection.

If the communication unit 110 detected more than one available SS in the step of 414, in step of 422, the selection unit 140 will select a SS as the only one from which receives setting information hereafter and sends its selection result to the communication unit 110. This selection process can be based on Priority of SS 200 contained in the received setting information. If the selection unit 140 still can't select a unique SS by using the priority, it may select the first SS of the queue from which the first setting information is received as its selection result.

Since mobile terminals are moved in different places frequently, if there is no response from SS 200 during one search period, the communication unit 110 can assume no SS 200 available. When SC 100 determined that it is not in the area of any SS, or there is no settings record for current time slot, the communication unit 110 will sends an null setting information to the setting-changing unit 120.

In step of 424, the determination unit 130 determined the received setting information from the selected SS containing setting suitable for the mobile terminal or not. If not contained, the process returns to step of 412.

If contained, the determination unit 130 sends the settings parameters contained in the received setting information to the setting-changing unit 120 and then the setting-changing unit 110 applies the received settings parameters to mobile terminals in the step of 426.

After this, SC 100 will pause for a period in the step of 428, and then repeat the process again. This process will continue unless SC 100 is stopped. The period between two processes should be configurable according to the user's requirements, and a default value for the period can be set to 120 seconds.

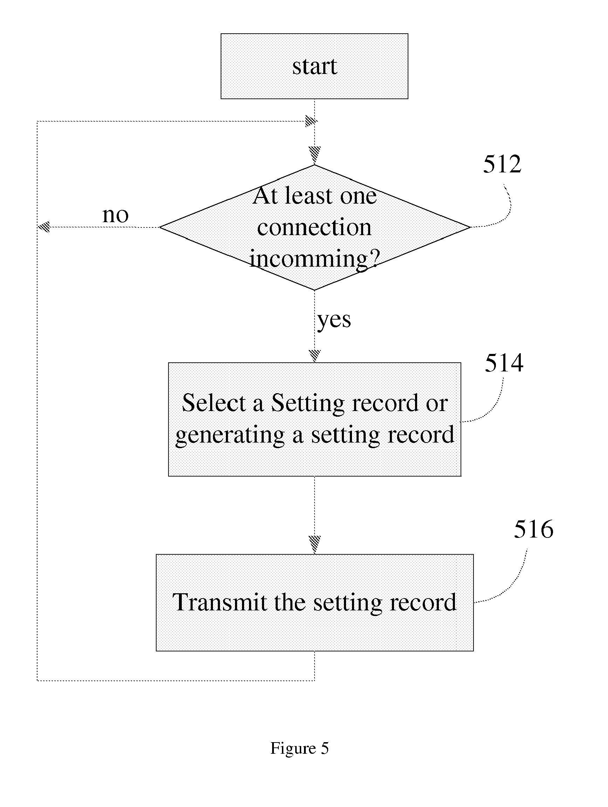

Figure 5 is a flow chart explaining the process executed in SS shown in Figure 3. In the following, the process executed in SS 200 will be described with reference to Fig. 5.

After SS 200 is turned on, the communication unit 210 begins to wait for an incoming connection from other devices until it's turned off again. In the step of 512, the communication unit 210 determines whether at least one connection is incoming. If the communication unit 210 determines there is no incoming connection, the process will repeat the step of 512.

If there is an incoming connection and the connection carries a request for settings, the selection unit 250 will check setting records stored in the storage unit 230 based on the current time in the step of 514 in which the selection unit 250 will compare the current time and time slot parameter of each record stored in the storage unit 230 and then select the setting record its time slot matched with the current time and send the setting record to the communication unit 210. Alternatively, the setting information generation unit 220 generates a setting record and sends it to the communication unit 210 in the step of 514.

In the step of 516, if the communication unit 210 received an available setting record from the selection unit 250 or the setting information generation unit 220, it will transmit it to SC 100 in the cinema, otherwise, it will send response containing null setting information. And then, the process will return to the step of 512.

It's worthy to mention that actions to add/edit/remove settings record are not showed here. But they are important to SS. SS will check the possible conflicts between records when these actions are taken.

From the above description of the exemplary embodiments of the present invention, the following features of this invention are apparent for those skilled in the art:
1 Both location and time based server mode. SS, which is either independent of any telecommunication network or using the infrastructure of a telecommunication network (e.g. an operator infrastructure) to emit the messages containing the parameters, is responsible for transmitting the expected settings to SC on mobile terminals; if SC receives settings from SS, it will use them; SC uses its default settings when the mobile terminal is not in a predetermined area to restore the mobile terminal into the state just before a previous setting change is made.
2 Short range wireless communication between mobile terminals and a setting server independent of any telecommunication network (e.g. via a independent WLAN hotspot) or via the infrastructure of a telecommunication network (e.g. via an operator infrastructure). This kind of communication methods enable location based setting server to deliver settings to mobile terminals. These communication methods include Bluetooth, WiFi, Zigbee, 2G, 3G, Wimax etc.

This invention makes good use of both location (SS independent of any telecommunication network (e.g. via a independent WLAN hotspot) or via the infrastructure of a telecommunication network (e.g. via an operator infrastructure) to emit the messages containing the parameters) and time dependency (time slot information for each setting record on SS) of settings of mobile terminals, and can be used to ensure all mobile phones in range to meet the requirement of that place. This invention can be used in cinema, meeting room, and any other places which have special requirements for mobile terminals.

This invention tends to control some behaviour of mobile terminals in certain location. It can be implemented on FT signature mobile phones, and be deployed for enterprise customers. Thus, this invention can increase users' loyalty to services of FT group.

### Applicability In Industries

In the present application, a system to automatically change settings of mobile terminals located in a certain area is provided. SS can be a standalone device, it can also be a hardware/software unit embedded in other devices such as, for example, a wireless access point or integrated in a telecommunication network. SC is a hardware or software solution for mobile terminals. By using this system, no user's intervention is needed and the settings chosen for the mobile terminal in a certain place are always right.

However, this invention is not limited to the exemplary embodiments as described above. But any system using location based server to actively control behaviour of mobile phones in range could be covered in this paper.

## Claims

1. A method for automatically changing settings of at least one mobile terminal located in a predetermined area, said method comprising the steps of:
- receiving setting information by a setting client operatively coupled to the at least one mobile terminal, said setting information being transmitted by a setting server and function of the predetermined area; and
- changing current settings of the at least one mobile terminal by the setting client based on the received setting information.

2. The method as claimed in claim 1, wherein the step of transmitting/ receiving the setting information is through wired communication or wireless communication including at least one of broadcasting communication, and point to point wireless communication.

3. The method as claimed in one of the previous claims, further comprising for the case of the point to point wireless communication, searching step of searching for the setting server periodically in order to receive the setting information.

4. The method as claimed in one of the previous claims, further comprising an adjustment step of adjusting its emission strength by the setting server to cover different predetermined areas.

5. The method as claimed in one of the previous claims, wherein in the step of transmitting the setting information, the setting information is transmitted at a predetermined interval.

6. The method as claimed in one of the previous claims, wherein the step of receiving the setting information further includes a determination step of determining by the setting clients whether the received setting information contains setting parameters valid for the mobile terminal.

7. The method as claimed in one of the previous claims, wherein the setting information contains at least one setting parameter for the mobile terminal and time slot information indicating a time period in which said setting information is transmitted to the mobile terminal.

8. The method as claimed in one of the previous claims, wherein the setting information contains priority information related to the setting server, and wherein the step of receiving the setting information further includes a selection step of selecting the setting information with highest priority from all received setting information.

9. The method as claimed in one of the previous claims, wherein if in the step of receiving the setting information, no setting information is received for a predetermined time, the setting clients determine there is no setting server in the predetermined area and then restore the mobile terminal's default setting.

10. The method as claimed in one of the previous claims, wherein the step of transmitting the setting information further includes a setting information generation step of generating setting information; a storage step of storing the generated setting information; a selection step of selecting one of the setting information stored in the storage step based on current time and transmitting it in the predetermined area; and a modification step of adding, editing, or removing the setting information stored in the storage step.

11. A setting client operatively coupled to a mobile terminal, said setting client comprising:
a communication unit arranged for receiving setting information from a setting server for the mobile terminal located in a predetermined area, said setting information being function of the predetermined area; and
a setting-changing unit arranged for changing current settings of the mobile terminal based on the received setting information.

12. A mobile terminal comprising a setting client as claimed in claim 11.

13. A setting server comprising:
- a setting information generation unit arranged for generating setting information for a setting client operatively coupled to at least one mobile terminal located in a predetermined area, said setting information being function of the predetermined area; and
- a communication unit arranged for transmitting the setting information to the setting client so that said setting client changes the current setting of the mobile terminal based on said setting information.

14. A setting server as claimed in claim 13, said setting server is integrated in a telecommunication network infrastructure.
